# FASCICULE DE BREVET EUROPEEN

(11) **EP 3 802 241 B1**
(45) Date de publication et mention de la délivrance du brevet: **29.03.2023**
(21) Numéro de dépôt: 19718696.8
(22) Date de dépôt: 17.04.2019
(51) Int. Cl.: B60S 1/58, B60S 1/34, E05B 85/10

(54) **DISPOSITIF ESSUIE-VITRE INTEGRANT UNE COMMANDE DE MANOEUVRE D'UN OUVRANT**
SCHEIBENWISCHVORRICHTUNG MIT EINER STEUERUNG ZUM BETÄTIGEN EINER ÖFFNUNGSPLATTE
WINDSCREEN WIPER DEVICE INCORPORATING A CONTROL FOR MANOEUVRING AN OPENING PANEL

(30) Priorité: 30.05.2018 FR 1854603
(43) Date de publication de la demande: 14.04.2021
(73) Titulaire: Renault s.a.s, 92100 Boulogne Billancourt (FR)
(72) Inventeur: LE DOUSSAL, Olivier, 91300 MASSY (FR)
(74) Mandataire: Renault Group
(86) Numéro de dépôt international: PCT/EP2019/060011
(87) Numéro de publication internationale: WO 2019/228706

(56) Documents cités:
- DE-A1-102007 060 635
- FR-A1- 2 375 074
- FR-A1- 2 724 616
- FR-A1- 2 954 739
- JP-A- H11 198 766
- US-A1- 2004 245 801

## Description

La présente invention concerne le domaine des dispositifs de type essuie-vitre, notamment pour véhicule automobile.

Les dispositifs essuie-vitre usuels comprennent un moteur muni d'un arbre d'entrainement dont l'extrémité libre est reliée au bras balai d'essuie-vitre afin d'entraîner ledit bras dans un mouvement de va et vient lorsque le dispositif est en mode actif. Le moteur est monté côté intérieur de la paroi vitrée et le bras balai est à l'extérieur pour être apte à venir en contact avec la face externe de la vitre à essuyer, l'arbre d'entraînement passant à travers la paroi. Sur certaines définitions d'essuyage en arrière d'un véhicule, un manchon protecteur additionnel fixé sur l'arbre d'entraînement du moteur a pour fonction de garantir l'étanchéité au niveau dudit arbre et sert de zone non mobile pour garantir la piste d'étanchéité pour la bague d'étanchéité de l'essuie-vitre au niveau de la paroi porteuse dudit dispositif. De tels dispositifs sont décrits par exemple dans la demande de brevet français FR2954739 ou dans la demande de brevet européenne EP 2001716. Ces manchons ont donc une fonction limitée à l'étanchéité. JP H11 198766 divulgue le préambule de la revendication 1.

Dans le cas d'un ouvrant vitré de véhicule, tel qu'une lunette ouvrante ou une porte de coffre vitrée classiquement munies d'un dispositif essuie-vitre, et lorsque le bras balai se trouve à portée de main, les utilisateurs ont tendance à utiliser ce bras comme moyen de manipulation de l'ouvrant alors que ce n'est pas sa fonction d'usage. Il y a donc des risques de détériorer le dispositif et notamment dans sa fonction d'essuyage. Il s'avère ainsi nécessaire de remédier à cet inconvénient.

L'invention vise à résoudre les inconvénients évoqués ci-dessus.

A cet effet, l'invention propose un dispositif essuie-vitre pour véhicule, apte à être monté à travers la paroi vitrée d'un ouvrant délimitant un espace intérieur et un espace extérieur, ledit dispositif comportant un moteur intérieur présentant un carter de transmission intérieur, ledit moteur actionnant un arbre d'entraînement guidé en sa partie distale dans ledit carter de transmission intérieur, l'extrémité libre extérieure dudit arbre étant apte à recevoir le bras balai d'essuyage, ledit arbre en sortie dudit carter étant logé au moins en partie dans un manchon apte à s'étendre dudit carter jusqu'à l'extérieur de la paroi vitrée d'ouvrant en passant à travers un trou traversant réalisée dans la paroi vitrée, ledit manchon étant emboîté géométriquement en sa partie distale sur la face externe dudit carter et étanchéifié avec au moins un organe d'étanchéité par rapport à l'arbre d'entraînement et avec au moins un organe d'étanchéité extérieur par rapport à ladite paroi du véhicule. Selon l'invention ledit manchon présente en son extrémité proximale extérieure une commande de manoeuvre de l'ouvrant.

Selon l'invention, ledit manchon comporte, en son extrémité proximale extérieure, un rebord dont une portion se prolonge par ladite commande de manoeuvre de l'ouvrant. Ledit rebord est donc extérieur.

De préférence selon l'invention, ledit rebord du manchon est apte à obturer le trou traversant dans la paroi vitrée en s'étendant en débord sur la partie de paroi entourant ledit trou. De préférence ce rebord est apte à recevoir l'organe d'étanchéité extérieur, par rapport à la paroi du véhicule, par interposition dudit organe entre la face interne dudit rebord de manchon et la face extérieure de ladite partie de paroi. De préférence ladite face interne du rebord est plane.

De préférence selon l'invention, le manchon présente, en sa surface externe intérieure, une portion filetée recevant un écrou de serrage apte à se visser en direction de la face intérieure de la paroi vitrée. De préférence ledit dispositif comprend une pièce d'interface protectrice apte à s'interposer entre ledit écrou et la face intérieure de la paroi vitrée. Une telle pièce d'interface peut être une bague.

En particulier selon l'invention, le manchon présente une nervure circulaire en sa surface interne, à proximité dudit rebord, et un épaulement circulaire en ledit rebord s'étendant en direction de l'arbre, qui définissent une gorge réceptrice de l'organe d'étanchéité assurant l'étanchéité dudit manchon par rapport à l'arbre d'entraînement.

Selon un mode de réalisation particulier de l'invention, le manchon présente, au moins en sa partie distale, une forme interne tronconique, et ladite partie distale du manchon est solidaire dudit carter par une liaison géométrique tronconique avec le pourtour dudit carter.

L'invention concerne aussi un ouvrant à paroi vitrée d'un véhicule munie d'un dispositif essuie-vitre disposé à travers un trou traversant réalisé dans ladite paroi, ledit dispositif essuie-vitre étant tel que décrit précédemment.

Plus particulièrement ladite paroi vitrée comportant le trou traversant à travers lequel passe le manchon du dispositif essuie-vitre est une vitre.

L'invention s'applique plus particulièrement aux véhicules automobiles. L'invention a ainsi également pour objet un véhicule automobile comprenant un dispositif essuie-vitre qui se caractérise en ce que ledit dispositif est tel que décrit précédemment. Elle a aussi pour objet un véhicule automobile comprenant un ouvrant à paroi vitré, muni de ce dispositif, comme décrit ci-dessus.

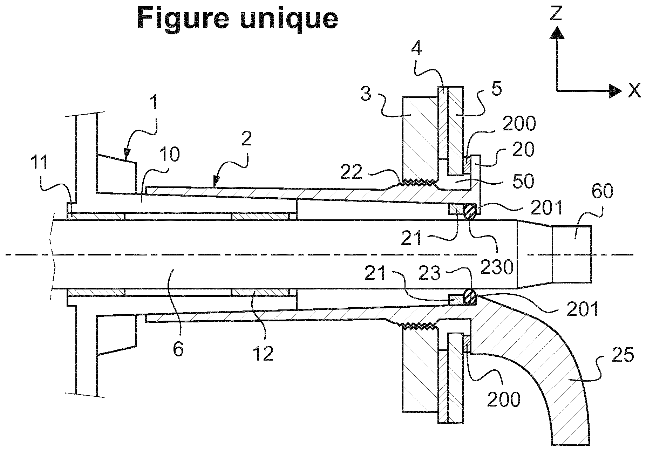

D'autres particularités et avantages de l'invention ressortiront à la lecture de la description faite ci-après d'un mode de réalisation préféré de l'invention, à titre indicatif mais non limitatif, en référence à la figure 1 unique annexée qui illustre le dispositif d'essuie-vitre selon l'invention, monté sur une paroi d'ouvrant vitrée d'un véhicule, selon une vue en coupe longitudinale.

Les orientations exprimées dans la description des figures sont données en référence au repère classique XYZ d'un véhicule, dans lequel X est la direction longitudinale du véhicule, orientée vers l'arrière du véhicule, Y est la direction transversale orientée vers la droite du véhicule, et Z est la direction verticale orientée vers le haut du véhicule.

Les notions d'intérieur et d'extérieur sont définies par rapport à la paroi vitrée d'ouvrant qui détermine une limite entre l'intérieur et l'extérieur du véhicule.

Les notions « interne » et « externe » se réfèrent à un élément précisé.

La figure 1 illustre le dispositif d'essuie-vitre selon l'invention, selon une vue en coupe longitudinale du dispositif en correspondance avec la direction longitudinale X du véhicule. Ledit dispositif est monté à travers la paroi vitrée 5 d'un ouvrant d'un véhicule.

Ce dispositif comprend un moteur 1 actionnant un arbre d'entraînement 6 guidé axialement par des paliers 11, 12 logés dans un carter de transmission 10 en sortie du moteur. Ledit arbre s'étend longitudinalement du moteur intérieur jusqu'au bras de balai extérieur en passant à travers un trou traversant 50 réalisé dans la paroi vitrée 5. Ledit arbre 6 est ainsi relié en l'une de ses extrémités au moteur, et son autre extrémité libre 60 débouchant à l'extérieur de la paroi vitrée est apte à être reliée à un bras balai non visible sur la figure. Pour remplir sa fonction d'essuyage de la vitre, de manière bien connue en soi, le bras du balai est mis en mouvement de va-et-vient dans un plan moyen perpendiculaire à la direction axiale de l'arbre d'entraînement.

Selon l'invention, un manchon longitudinal 2 est disposé pour s'étendre du carter de transmission 10 jusqu'à l'extérieur de la paroi vitrée 5, en entourant l'arbre d'entraînement 6. Selon l'exemple, le carter de transmission 10 qui loge l'arbre d'entraînement partiellement sur une partie distale de l'arbre, présente une forme externe tronconique dont le diamètre va en se réduisant suivant la direction longitudinale X du véhicule, soit en partant du côté moteur 10 et en allant en direction de la paroi vitrée 5. Le manchon 2 présente une forme longitudinale tronconique dont le diamètre va, à l'inverse de celui du carter, en s'accroissant en partant du côté moteur 10 et en allant en direction de la paroi vitrée 5. En son extrémité distale intérieure, le manchon est ainsi emboîté suivant une liaison géométrique tronconique autour de la portion tronconique accessible du carter de transmission 10, ledit manchon 2 ainsi centré sur l'arbre 6, s'étendant longitudinalement autour de l'arbre 6 jusqu'à la face extérieure de la paroi vitrée, après avoir traversé le trou traversant 50 par où passe ledit arbre 6.

L'extrémité proximale extérieure du manchon se termine par un rebord extérieur 20, circulaire, sensiblement perpendiculaire à la direction longitudinale du manchon, et d'une dimension suffisante pour obturer le trou traversant 50 en venant en débord jusque sur la partie de paroi vitrée entourant ledit trou de manière à assurer l'étanchéité avec la paroi vitrée et aussi pour renforcer le maintien du manchon. Ledit rebord s'étend donc vers la paroi vitrée. La face interne dudit rebord est plane. Un organe d'étanchéité fixe 200, par exemple un joint plat circulaire, est prévu entre ladite face interne plane du rebord de manchon et la face extérieure de ladite partie de paroi vitrée.

Selon l'invention, le rebord extérieur 20 du manchon présente une portion qui se prolonge extérieurement par un élément formant une commande de manoeuvre 25 de l'ouvrant. Cette commande de manoeuvre est un moyen de préhension qui permet de manipuler l'ouvrant, notamment pour l'ouvrir. Ce moyen de préhension peut avoir une forme de poignée, par exemple courbe comme celle illustrée non limitativement sur la figure. Pour garantir le bon positionnement de la préhension, le centrage suivant la verticale Z du manchon 2 peut se faire par un positionnement par rapport au moteur 1 ou à une pièce d'interface 4 entre la paroi vitrée et un écrou de serrage décrite plus loin.

En partie interne du manchon, soit sur la surface interne de sa paroi, venant se situer au niveau du trou traversant 50 de la paroi 5, est présente une gorge 23 formée entre un épaulement 201 du rebord de manchon 20 s'étendant en direction de l'arbre 6 et une nervure en relief 21, circulaire, présente suivant le pourtour de la surface interne du manchon. Ladite gorge 23 reçoit un organe d'étanchéité 230, par exemple tel qu'un joint rond circulaire, assurant l'étanchéité entre l'arbre et le manchon.

Le manchon 2 présente sur la surface externe de sa paroi une portion filetée intérieure 22, à proximité intérieure de la paroi vitrée 5, soit aussi à proximité intérieure de son extrémité extérieure. Sur cette portion filetée vient se visser un écrou de serrage 3, ledit écrou étant intérieur. Ledit écrou 3 est adapté au vissage sur cette portion filetée. Cette liaison vissée permet de fixer le manchon 2 en son extrémité proximale en serrant cette extrémité sur la paroi vitrée, ladite paroi étant prise en sandwich entre le rebord extérieur du manchon et l'écrou. Le serrage se fait par vissage de l'écrou contre la paroi interne de la paroi vitrée 5, une pièce d'interface protectrice 4 étant interposée entre la face d'écrou adjacente et la face interne de la paroi vitrée, de préférence en débord du pourtour de l'écrou pour une meilleure protection. Cette pièce d'interface 4 qui entoure le manchon, doit être apte à épouser la face de la partie de paroi vitrée adjacente contre laquelle elle vient en appui d'un côté et la face d'écrou adjacente contre laquelle elle est serrée de l'autre côté. Une telle pièce d'interface peut être par exemple une bague en matière plastique dure, en particulier en EPDM.

Le manchon est donc maintenu fixe d'une part par une liaison géométrique, en particulier conique, au carter de transmission logeant des paliers de guidage de l'arbre d'entraînement, et d'autre part par une liaison vissée de serrage sur la paroi vitrée.

La paroi vitrée percée du trou traversant 50 récepteur de l'arbre d'entraînement et du manchon du dispositif essuie-vitre selon l'invention est de préférence la vitre elle-même.

La commande de manoeuvre de l'ouvrant 25 est solidement fixée du fait de son intégration au manchon, en formant de préférence un monobloc avec la partie principale dudit manchon. Elle permet de manipuler l'ouvrant sans induire de risque de détérioration de la fonction essuyage. Le dispositif essuie-vitre selon l'invention présente une compacité avantageuse car la fixation de la commande de manoeuvre se fait par l'intérieur et est non visible de l'extérieur du véhicule.

Ledit dispositif essuie-vitre présente en outre une grande efficacité de l'étanchéité car la fonction étanchéité du manchon est assurée par un centrage pour garantir la bonne étanchéité au niveau de l'arbre d'entraînement et une étanchéité plan/plan entre le manchon et la paroi vitrée.

## Revendications

1. Dispositif essuie-vitre pour véhicule, apte à être monté à travers la paroi vitrée (5) d'un ouvrant délimitant un espace intérieur et un espace extérieur, ledit dispositif comportant un moteur intérieur (1) présentant un carter de transmission (10) intérieur, ledit moteur actionnant un arbre d'entraînement (6) guidé dans ledit carter de transmission (10), l'extrémité libre extérieure (60) dudit arbre étant apte à recevoir le bras balai d'essuyage, ledit arbre en sortie dudit carter étant logé au moins en partie dans un manchon (2) apte à s'étendre dudit carter (10) jusqu'à l'extérieur de la paroi vitrée d'ouvrant, en passant à travers un trou traversant (50) réalisé dans la paroi vitrée (5), ledit manchon (2) étant emboîté géométriquement en sa partie distale sur la face externe dudit carter (10) et étanchéifié avec au moins un organe d'étanchéité (230) par rapport à l'arbre d'entraînement et avec au moins un organe d'étanchéité extérieur (200) par rapport à ladite paroi du véhicule, ledit manchon (2) présentant en son extrémité proximale extérieure une commande de manoeuvre (25) de l'ouvrant,
**caractérisé en ce que** ledit manchon (2), en son extrémité proximale extérieure, présente un rebord (20) dont une portion se prolonge par ladite commande de manoeuvre (25) de l'ouvrant.

2. Dispositif selon la revendication 1, **caractérisé en ce que** ledit rebord du manchon est apte à obturer le trou traversant (50) dans la paroi vitrée (5) en s'étendant en débord sur la partie de paroi entourant ledit trou, et de préférence apte à recevoir l'organe d'étanchéité extérieur (200) par interposition entre la face interne dudit rebord de manchon et la face extérieure de ladite partie de paroi.

3. Dispositif selon l'une des revendications 1 à 2, **caractérisé en ce que** ledit manchon présente, en sa surface externe intérieure, une portion filetée (22) recevant un écrou de serrage (3) apte à se visser en direction de la face intérieure de la paroi vitrée.

4. Dispositif selon la revendication 3, **caractérisé en ce que** ledit dispositif comprend une pièce d'interface protectrice (4) apte à s'interposer entre ledit écrou de serrage (3) et la face intérieure de la paroi vitrée (5).

5. Dispositif selon l'une des revendications 1 à 4, **caractérisé en ce que** ledit manchon (2) présente une nervure circulaire (21) en sa surface interne, à proximité dudit rebord (20), et un épaulement circulaire (201) en ledit rebord s'étendant en direction de l'arbre (6), qui définissent une gorge (23) réceptrice de l'organe d'étanchéité (230) assurant l'étanchéité dudit manchon par rapport à l'arbre d'entraînement.

6. Dispositif selon l'une des revendications 1 à 5, **caractérisé en ce que** ledit manchon (2) présente au moins en sa partie distale une forme interne tronconique et **en ce que** ladite partie distale du manchon est solidaire dudit carter (10) par une liaison géométrique tronconique avec le pourtour externe dudit carter.

7. Ouvrant à paroi vitrée (5) d'un véhicule munie d'un dispositif essuie-vitre disposé à travers un trou traversant (50) réalisé dans ladite paroi, **caractérisé en ce que** ledit dispositif est défini suivant l'une des revendications 1 à 6.

8. Ouvrant à paroi vitrée selon la revendication 7, **caractérisé en ce que** ladite paroi vitrée comportant le trou traversant (50) à travers lequel passe le manchon (2) du dispositif essuie-vitre est une vitre.

9. Véhicule automobile comprenant un dispositif essuie-vitre, **caractérisé en ce que** ledit dispositif est défini à l'une des revendications 1 à 6.

10. Véhicule automobile comprenant un ouvrant à paroi vitrée, **caractérisé en ce que** le dit ouvrant est défini à l'une des revendications 7 à 8.

## Patentansprüche

1. Scheibenwischvorrichtung für ein Fahrzeug, die geeignet ist, durch die Glaswand (5) eines Öffnungselements hindurch angebracht zu sein, das einen Innenraum und einen Außenraum begrenzt, wobei die Vorrichtung einen inneren Motor (1) aufweist, der ein inneres Getriebegehäuse (10) aufweist, wobei der Motor eine Antriebswelle (6) betätigt, die in dem Getriebegehäuse (10) geführt wird, wobei das freie äußere Ende (60) der Welle geeignet ist, den Wischerarm aufzunehmen, wobei die Welle am Ausgang des Gehäuses wenigstens teilweise in einer Hülse (2) aufgenommen ist, die geeignet ist, sich vom Gehäuse (10) bis zum Äußeren der Öffnungsglaswand durch ein Durchgangsloch (50) zu erstrecken, das in der Glaswand (5) ausgebildet ist, wobei die Hülse (2) geometrisch an ihrem distalen Abschnitt auf die Außenfläche des Gehäuses (10) gesteckt ist und mit wenigstens einem Abdichtungsorgan (230) bezogen auf die Antriebswelle und mit wenigstens einem äußeren Abdichtungsorgan (200) bezogen auf die Wand des Fahrzeugs abgedichtet ist, wobei die Hülse (2) an ihrem äußeren proximalen Ende ein Betätigungsteil (25) des Öffnungselements aufweist, **dadurch gekennzeichnet, dass** die Hülse (2) an ihrem äußeren proximalen Ende einen Rand (20) aufweist, von dem ein Teilbereich durch das Betätigungsteil (25) des Öffnungselements verlängert wird.

2. Vorrichtung nach Anspruch 1, **dadurch gekennzeichnet, dass** der Rand der Hülse geeignet ist, das Durchgangsloch (50) in der Glaswand (5) zu verschließen, indem er sich über den Wandabschnitt, der das Loch umgibt, hervorstehend erstreckt, und vorzugsweise geeignet ist, das äußere Abdichtungsorgan (200) durch Zwischensetzen zwischen die Innenfläche des Hülsenrands und die Außenfläche des Wandabschnitts aufzunehmen.

3. Vorrichtung nach einem der Ansprüche 1 bis 2, **dadurch gekennzeichnet, dass** die Hülse an ihrer inneren Außenfläche einen Gewindeabschnitt (22) aufweist, der eine Klemmschraube (3) aufnimmt, die geeignet ist, in Richtung der Innenfläche der Glaswand geschraubt zu werden.

4. Vorrichtung nach Anspruch 3, **dadurch gekennzeichnet, dass** die Vorrichtung ein schützendes Zwischenteil (4) umfasst, das geeignet ist, zwischen der Klemmschraube (3) und der Innenfläche der Glaswand (5) angeordnet zu sein.

5. Vorrichtung nach einem der Ansprüche 1 bis 4, **dadurch gekennzeichnet, dass** die Hülse (2) eine kreisförmige Rippe (21) an ihrer Innenfläche in der Nähe des Rands (20) und einen kreisförmigen Absatz (201) an dem Rand aufweist, der sich in Richtung der Welle (6) erstreckt, die eine Rille (23) definieren, die das Abdichtungsorgan (230) aufnimmt, das die Dichtheit der Hülse zur Antriebswelle sicherstellt.

6. Vorrichtung nach einem der Ansprüche 1 bis 5, **dadurch gekennzeichnet, dass** die Hülse (2) wenigstens an ihrem distalen Abschnitt eine kegelstumpfförmige Innenform aufweist, und dadurch, dass der distale Abschnitt der Hülse durch eine kegelstumpfförmige geometrische Verbindung mit dem Außenumfang des Gehäuses fest mit dem Gehäuse (10) verbunden ist.

7. Öffnungselement mit Glaswand (5) eines Fahrzeugs, das mit einer Scheibenwischvorrichtung versehen ist, die durch ein Durchgangsloch (50) hindurch angeordnet ist, das in der Wand ausgebildet ist, **dadurch gekennzeichnet, dass** die Vorrichtung nach einem der Ansprüche 1 bis 6 definiert ist.

8. Öffnungselement mit Glaswand nach Anspruch 7, **dadurch gekennzeichnet, dass** die Glaswand, die das Durchgangsloch (50) aufweist, durch welches die Hülse (2) der Scheibenwischvorrichtung hindurchgeht, eine Scheibe ist.

9. Kraftfahrzeug umfassend eine Scheibenwischvorrichtung, **dadurch gekennzeichnet, dass** die Vorrichtung in einem der Ansprüche 1 bis 6 definiert ist.

10. Kraftfahrzeug umfassend ein Öffnungselement mit Glaswand, **dadurch gekennzeichnet, dass** das Öffnungselement in einem der Ansprüche 7 bis 8 definiert ist.

## Claims

1. Windscreen wiper device for a vehicle, capable of being mounted through the glazed wall (5) of an opening panel delimiting an internal space and an external space, said device comprising an internal motor (1) having an internal transmission casing (10), said motor actuating a driveshaft (6) guided in said transmission casing (10), the free outer end (60) of said shaft being able to receive the wiper arm, said shaft at the output of said casing being housed at least partly in a sleeve (2) that can extend from said casing (10) to the outside of the glazed wall of the opening panel, by passing through a through-hole (50) produced in the glazed wall (5), said sleeve (2) being fitted geometrically in its distal part over the outer face of said casing (10) and sealed with at least one sealing member (230) with respect to the driveshaft and with at least one outer sealing member (200) with respect to said wall of the vehicle, said sleeve (2) having, at its outer proximal end, a control (25) for manoeuvring the opening panel,
**characterized in that** said sleeve (2), at its outer proximal end, has a flange (20) of which a portion is extended by said control (25) for manoeuvring the opening panel.

2. Device according to Claim 1, **characterized in that** said flange of the sleeve is capable of blocking the through-hole (50) in the glazed wall (5) by extending overlapping over the part of wall surrounding said hole, and preferably capable of receiving the outer sealing member (200) by insertion between the inner face of said sleeve flange and the outer face of said part of wall.

3. Device according to one of Claims 1 and 2, **characterized in that** said sleeve has, on its internal outer surface, a threaded portion (22) receiving a clamping nut (3) capable of being screwed towards the inner face of the glazed wall.

4. Device according to Claim 3, **characterized in that** said device comprises a protective interface part (4) capable of being inserted between said clamping nut (3) and the inner face of the glazed wall (5).

5. Device according to one of Claims 1 to 4, **characterized in that** said sleeve (2) has a circular rib (21) on its inner surface, in proximity to said flange (20), and a circular shoulder (201) in said flange extending towards the shaft (6), which define a receiving groove (23) for the sealing member (230) ensuring the sealing of said sleeve with respect to the driveshaft.

6. Device according to one of Claims 1 to 5, **characterized in that** said sleeve (2) has, at least in its distal part, a tapered internal form and **in that** said distal part of the sleeve is secured to said casing (10) by a tapered geometrical link with the outer perimeter of said casing.

7. Opening panel with glazed wall (5) of a vehicle provided with a windscreen wiper device disposed through a through-hole (50) produced in said wall, **characterized in that** said device is defined according to one of Claims 1 to 6.

8. Opening panel with glazed wall according to Claim 7, **characterized in that** said glazed wall comprising the through-hole (50) through which the sleeve (2) of the windscreen wiper device passes is a window.

9. Motor vehicle comprising a windscreen wiper device, **characterized in that** said device is defined in one of Claims 1 to 6.

10. Motor vehicle comprising an opening panel with glazed wall, **characterized in that** said opening panel is defined in one of Claims 7 and 8.
